# EUROPEAN PATENT SPECIFICATION

(11) **EP 1 826 756 B1**
(45) Date of publication and mention of the grant of the patent: **21.01.2009**
(21) Application number: 06110282.8
(22) Date of filing: 22.02.2006
(51) Int. Cl.: G11B 7/09

(54) **Pickup for accessing moving storage media**
Lesekopf für Zugang zu beweglichen Speichermedien
Tête de reproduction pour l'accès à des supports de stockage mobiles

(43) Date of publication of application: 29.08.2007
(73) Proprietor: DEUTSCHE THOMSON-BRANDT GMBH, 78048 Villingen-Schwenningen (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(56) References cited:
- PATENT ABSTRACTS OF JAPAN vol. 2000, no. 07, 29 September 2000 (2000-09-29) -& JP 2000 123385 A (SONY CORP), 28 April 2000 (2000-04-28)

## Description

The invention relates to pickups which are apparatuses for accessing moving storage media.

For accessing moving storage media, apparatuses also called pickups are being used, which have a carrier and an actuator. By carrier shall be denoted all those construction elements of the pickup together that are stiffly or rigidly connected to each other and relative to which the actuator moves. By actuator shall be denoted an element, rigid in itself, which carries a lens or other transducer elements and coils, and is able to perform quick incremental movements in one or more directions or degrees of freedom relative to the moving storage medium. Accessing shall encompass reading access for reading informations from the storage medium, or writing access for writing or recording informations into the storage medium, or combinations of reading and writing access.

It is known in some types of pickup to connect the actuator to the carrier by means of suspension wires. The carrier being an ensemble of rigidly connected elements does not preclude that typically the pickup as a whole, including carrier, suspension wires and actuator, is movable and is being moved in a direction orthogonal to information tracks on the storage medium, so that all storage locations on the medium can be accessed. The suspension wires constitute a connection between the actuator and the carrier which typically is at the same time mechanically elastic and electrically conductive.

In a commonly used known pickup design, suspension wires are arranged all in parallel, being connected with one of their ends to the carrier, and with their other end to a coil carrying actuator body. These connections being soldering points allows the suspension wires to carry currents for activating the actuator from a driving circuit or power amplifier stage or current source situated on the carrier to the coils situated on the actuator. In cases when the actuator comprises several coils, several current conducting wire connections are needed between the carrier and the actuator. In known designs, the suspension wires are brought into a substantially rectangular contact with a surface of a contact element, e.g. by being inserted into a hole or by touching the surface at its side, and are being soldered to surrounding metal pads, e.g. to appropriately shaped copper tracks or strip lines when the contact element is a Printed Circuit Board or PCB.

Generally, each soldering point needs to have a certain minimum diameter, in order to obtain reliable soldering connections under mass manufacturing conditions. Also, for a reliable insulation, a certain minimum gap has to be kept free between any two neighboring copper pads or other conductive parts like strip lines on PCBs. In the described pickup designs, these necessities result in a certain minimum distance to be kept between any two neighboring suspension wires, which substantially equals minimum soldering point size plus minimum gap size. Such minimum distance to be kept in any specific direction will correspondingly limit the overall pickup dimension in that direction.

An actuator of the described type, when allowing focus and tracking motion, will have its suspension wires substantially parallel to the scanned surface of the moving storage medium. The described contact element, being orthogonal to the suspension wires, will hence also be orthogonal to the storage medium surface. With suspension wires stacked in focus direction, which is a direction orthogonal to the scanned media surface, the mimimum distance between neighboring suspension wires will directly influence the overall height of the pickup, as measured in the focus direction. Especially for portable applications, small pickup dimensions are desirable, and the described minimum distance between suspension wires hampers this design goal.

JP-A-2000-123385 shows a typical prior art arrangement, which also defines the preamble of claim 1.

The invention aims at improving a pickup of the described type with respect to at least these drawbacks.

In the invention, it has been realized that deviating from the known pickup design where all soldering points are on the same side of the contact element, despite causing at first sight a drawback of more complicated handling, advantageously allows to reduce or relax the described minimum distance limitations. As such, it attends the shift of priorities of cost vs. size that comes along with the unbroken trend of miniaturization.

A pickup according to the invention has a carrier, an actuator and two or more suspension wires joining the carrier and the actuator, and at least one of the carrier and the actuator has a contact element to which two or more of the suspension wires are connected each in a soldering connection. Each of the at least one contact elements has two surfaces. According to the invention, for each of the soldering connections situated on a first one of the surfaces, the one or more closest neighboring ones of the soldering connections are situated on a second one of the surfaces, different from the first one. With other words, for each specific soldering connection, the closest neighboring soldering connections are situated on a surface that is different from the surface the specific soldering connection is located on. The advantage is, that on any specific one of the surfaces of the contact elements, any of the soldering connections is adjacent to other soldering connections which are not closer than the next but one suspension wire, so that minimum distance requirements are relaxed.

Advantageously, in a pickup according to the invention, a distance between neighboring suspension wires is less than a predefined minimum soldering connection width plus a predefined minimum insulation gap. In this case the improvements made possible by the invention are used to reduce the distance of the suspension wires, the advantage being that the overall dimensions of the pickup can be reduced accordingly, or that the gained space can be used to design additional mechanical stability into some of the surrounding parts.

Advantageously, in another pickup according to the invention, at least one of the soldering connections has a width larger than a predefined minimum necessary soldering connection width. In this case the improvements made possible by the invention are used to have bigger soldering connections, the advantage being a more reliable soldering connection and/or greater ease of manufacturing or assembly.

Further advantages of the invention and variants thereof are given in the subsequent description and figures. In the following, the invention will be illustrated assuming the moving storage media are disks carrying concentric circular or spiral information tracks, with the access being of reflective type where an access light beam is being generated and focused onto the information track and a reflected light beam coming back from the information track is being focused onto a photodetector arrangement and being evaluated. However, it is within the scope of this invention to be used on any kind of optical recording medium having information tracks in layers, like those in card or tape form; and regardless whether the access principle is of a reflective or of a transductive type. Moreover, the principles of the invention can as well be used on magnetical storage, or actually, on any access of moving storage where a transducer has to be quickly servo controlled to follow an information track situated on a surface of a storage medium.

In the figures,
- Fig. 1: shows a prior art pickup;
- Fig. 2: shows a detail of a prior art pickup;
- Fig. 3: shows a printed circuit board of a prior art pickup;
- Fig. 4: shows a detail of a pickup according to the invention;
- Fig. 5: shows a printed circuit board of a pickup according to the invention.

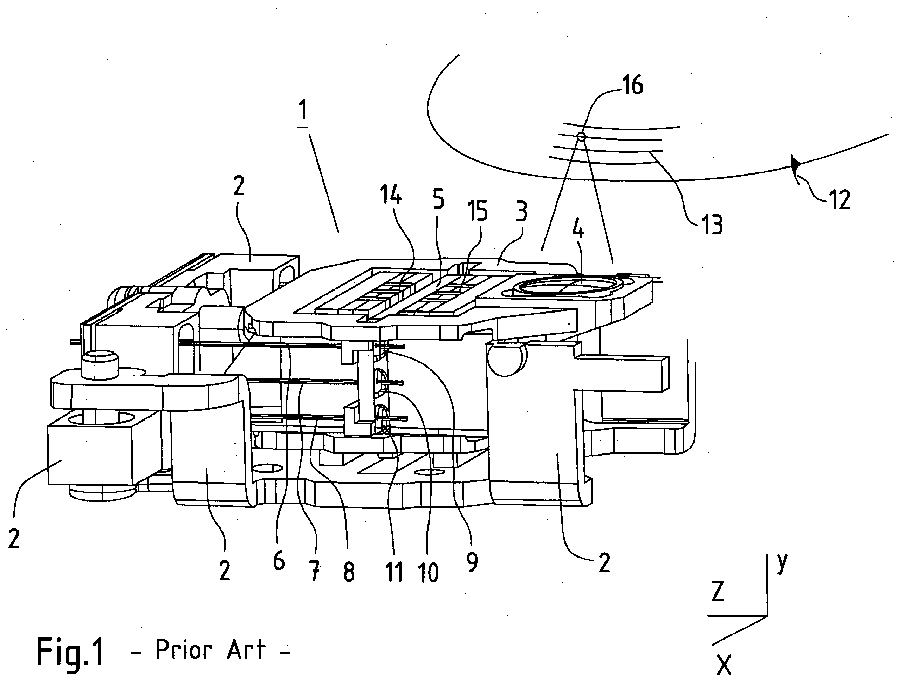

Fig. 1 shows a prior art pickup 1 having a carrier 2, an actuator 3 carrying a lens 4 and coils on a printed circuit board 5. The coils, not shown, interact with a magnetic field generated by magnet configurations 14, 15. The carrier 2 and the actuator 3 are connected by suspension wires 6, 7, 8; three more suspension wires, not visible in this figure, are situated at the back side of the pickup, in symmetry to the shown ones. The suspension wires 6, 7, 8 are directly connected to the printed circuit board 5 in soldering points 9, 10, 11, so that the printed circuit board 5 also serves as contact element. All three soldering points 9, 10, 11 are situated on the same side of the printed circuit board 5. By means of the suspension with the suspension wires 6, 7, 8, the actuator 3 with the lens 4 is able to perform focus motion in a focus direction Y orthogonal to a disk 12 carrying substantially circular information tracks 13, shown in the figure with strongly exaggerated distance. Additionally, the actuator 3 is able to perform tracking motion in a tracking direction X parallel to the surface of the disk 12 and orthogonal to the information tracks 13. Additionally, the actuator 3 is able to perform so-called radial tilt motion by rotating around an information direction Z which is parallel to the tangent to the information tracks 13 at a scanning spot 16.

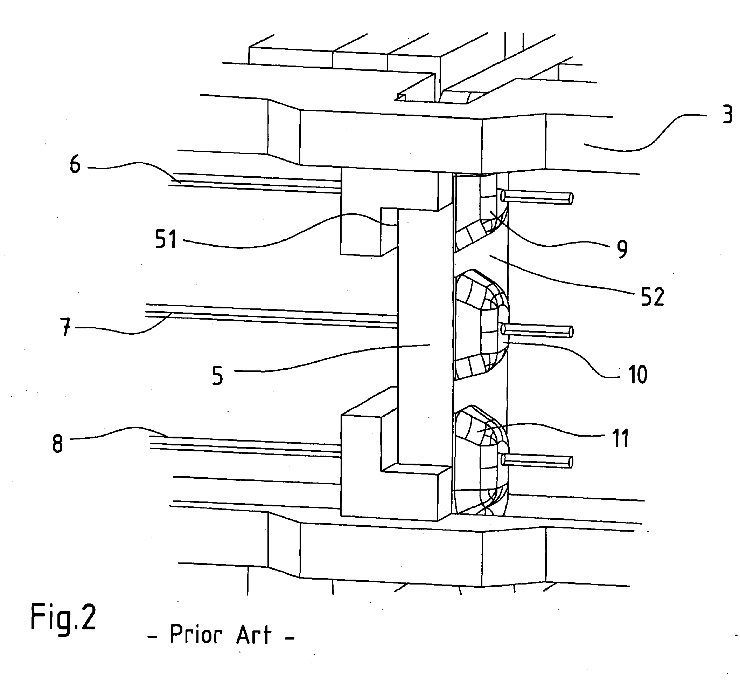

Fig. 2 shows a detail of the prior art pickup of Fig. 1. The suspension wires 6, 7, 8 are shown coming from the carrier 2 not shown and entering the printed circuit board 5 through its left surface 51. The suspension wires 6, 7, 8 then exit the printed circuit board 5 through its right surface 52, where they are connected in the soldering points 9, 10, 11. Copper lines, not shown, go from the soldering points to printed coils, also not shown, on the printed circuit board 5. A similar, symmetric configuration exists at the back side of the pickup, involving the other three suspension wires and the back end of the printed circuit board 5.

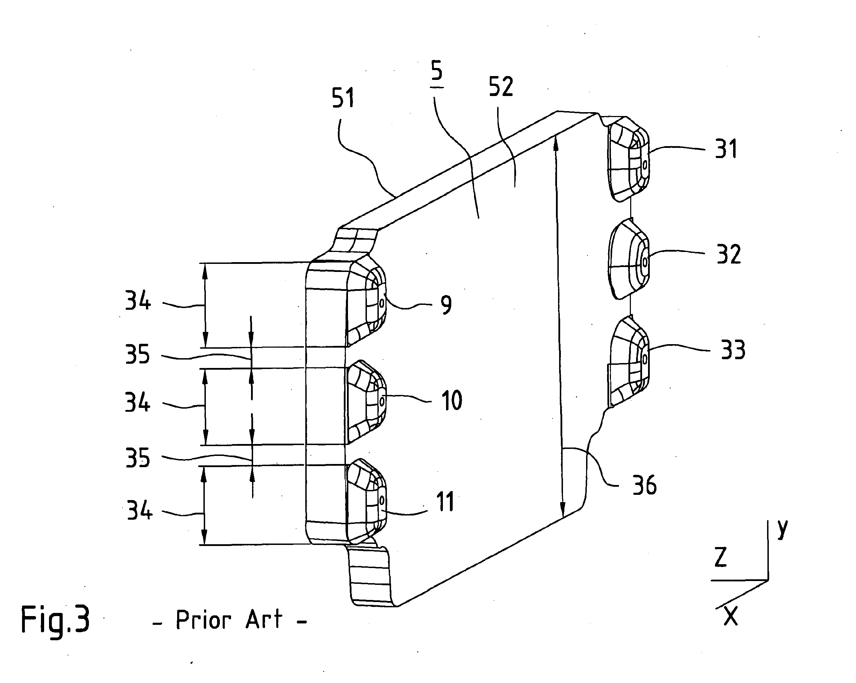

Fig. 3 shows the printed circuit board 5 of the prior art pickup 1 of Fig. 1, without any surrounding elements, but with all 6 soldering points 9, 10, 11, 31, 32, 33. The printed circuit board 5 has a left surface 51 and a right surface 52, and all soldering points 9, 10, 11, 31, 32, 33 are situated on the same, namely the right surface 52 of the printed circuit board 5. Having all the soldering points 9, 10, 11, 31, 32, 33 on the same surface 52 of the printed circuit board 5 is usually being selected, because it offers the advantage that the soldering - regardless of whether it is performed manually or by an automatic soldering tool - then requires fewer handling steps, allowing for quicker cycle time and higher production rate.

The suspension wires are arranged in two groups, each group consisting of three wires stacked on top of each other in focus direction Y. This corresponds to the soldering points being arranged in a first group 9, 10, 11 arranged in focus direction Y and a second group 31, 32, 33 also arranged in focus direction Y. Within each group, the soldering points have a width 34 in focus direction Y, and between them there is a gap 35 for insulation, so that the overall height 36 of the printed circuit board 5 has to be at least three times the width 34 plus two times the gap 35.

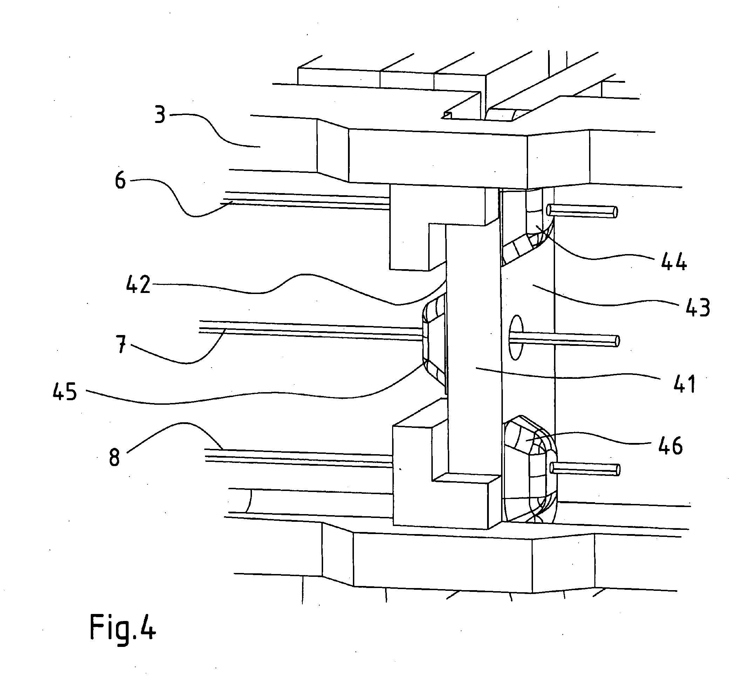

Fig. 4 shows a detail of a pickup according to the invention. The area shown substantially corresponds to the area shown in Fig. 2. The suspension wires 6, 7, 8 are shown coming from the carrier 2 not shown and entering a printed circuit board 41 through its left surface 42. The suspension wires 6, 7, 8 then exit the printed circuit board 41 through its right surface 43. The topmost suspension wire 6 is connected in the soldering point 44 on the right surface 43 of the printed circuit board 41, the middle suspension wire 7 is connected in the soldering point 45 on the left surface 42, and the lowermost suspension wire 8 is connected in the soldering point 46 on the right surface 43. Copper lines, not shown, go from the soldering points to printed coils, also not shown, on the printed circuit board 5. A similar, symmetric configuration exists at the back side of the pickup, involving the other three suspension wires and the back end of the printed circuit board 41.

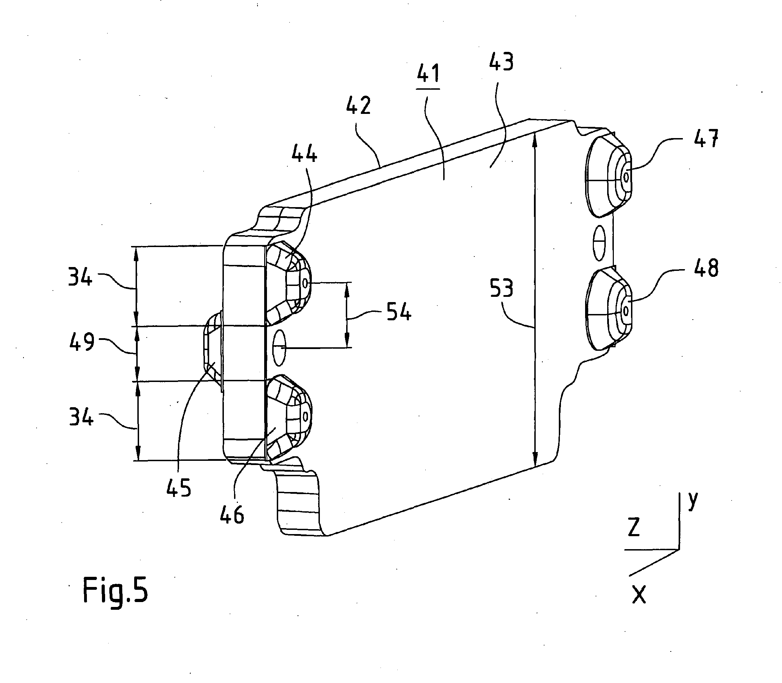

Fig. 5 shows the printed circuit board 41 of the pickup according to the invention, without any surrounding elements, but with 5 soldering points 44, 45, 46, 47, 48 of the 6 soldering points shown. A sixth soldering point, symmetrical to the front middle soldering point 45, is not visible. All soldering points 44, 45, 46, 47, 48 have the width 34 in focus direction Y. The dimensions of the printed circuit board 41 and the arrangement of the soldering points 44, 45, 46, 47, 48 is such that a first soldering point 44 situated on the right surface 43 of the printed circuit board 41 and a second soldering point 45 situated on the left surface 42 overlap in the focus direction Y. Similarly, the second soldering point 45 and a third soldering point 46 situated on the right surface 43 overlap in the focus direction Y. As a consequence, a distance 49 in focus direction Y between the first soldering point 44 and the third soldering point 46 is less than the sum of the width 34 plus two gaps, i.e. is less than what would be necessary in the prior art pickup. Moreover, the distance 49 is even less than the width 34, so that the soldering points would no longer be separate and insulated from each other, if they were situated on a same surface of the printed circuit board. Because of the reduced distances 49, 54 in focus direction Y, an overall reduced height 53 of the printed circuit board 41 is smaller than the height 36 of the printed circuit board 5 of the prior art pickup 1.

So far, it has been described how the relaxed minimum distance requirements made possible with the invention can be used to reduce the pickup dimension in focus direction, with other words the height of the pickup. Other scenarios and design constraints may exist, where the pickup dimension in the tracking direction is critical, and the principles of this invention can also be used to reduce minimum distances of suspension wires neighboring in tracking direction, hence allowing to reduce the corresponding pickup dimension, too.

With other words, in a pickup according to the invention having a carrier 2, an actuator 3, and suspension wires 6, 7, 8 joining them, for decreasing the overall height of the pickup in focus direction Y, closest neighboring ones of soldering connections 44, 45, 46, 47, 48 of the suspension wires 6, 7, 8 are located on different surfaces 42, 43 of contact elements 41.

## Claims

1. A pickup for accessing moving storage media (12), having a carrier (2), an actuator (3) and two or more suspension wires (6, 7, 8) joining the carrier (2) and the actuator (3), at least one of the carrier (2) and the actuator (3) having a contact element (41) to which two or more of the suspension wires (6, 7, 8) are connected each in a soldering connection (44, 45, 46, 47, 48), the at least one contact elements (41) each having two surfaces (42, 43), the pickup **characterised in that** for each of the soldering connections (44, 45, 46) situated on a first one of the surfaces (42, 43) of the at least one contact elements (41), closest neighboring ones of the soldering connections (44, 45, 46) are situated on a second one of the surfaces (42, 43) different from the first one.

2. The pickup of claim 1, where a distance (54) between neighboring suspension wires is less than a minimum soldering connection width (34) plus a minimum insulation gap (35).

3. The pickup of claim 1, where at least one of the soldering connections (44, 45, 46, 47, 48) has a width (34) larger than a minimum necessary soldering connection width.

## Patentansprüche

1. Aufnehmer zum Zugreifen auf sich bewegende Speichermedien (12), der einen Träger (2), einen Aktuator (3) und zwei oder mehr den Träger (2) und den Aktuator (3) miteinander verbindende Aufhängungsdrähte (6, 7, 8) aufweist, wobei mindestens der Träger (2) oder der Aktuator (3) ein Kontaktelement (41) aufweist, mit welchem zwei oder mehrere der Aufhängungsdrähte (6, 7, 8) jeweils an einer Lötverbindung (44, 45, 46, 47, 48) verbunden sind, wobei das mindestens eine Kontaktelement (41) jeweils zwei Flächen (42, 43) aufweist; der Aufnehmer **dadurch gekennzeichnet, dass** für jede der Lötverbindungen (44, 45, 46), die sich auf einer ersten der Flächen (42, 43) des mindestens einen Kontaktelementes (41) befinden, die am nächsten benachbarten der Lötverbindungen (44, 45, 46) sich auf einer zweiten, von der ersten unterschiedenen der Flächen (42, 43) befinden.

2. Aufnehmer nach Anspruch 1, wobei eine Entfernung (54) zwischen benachbarten Aufhängungsdrähten weniger als eine minimale Lötverbindungsbreite (34) zuzüglich eines minimalen Isolierungszwischenraumes (35) beträgt.

3. Aufnehmer nach Anspruch 1, wobei mindestens eine der Lötverbindungen (44, 45, 46, 47, 48) eine Breite (34) aufweist, die breiter als eine minimale erforderliche Lötverbindungsbreite ist.

## Revendications

1. Tête de reproduction pour l'accès à des supports (2) de stockage mobiles, comportant un support (2), un actionneur (3) et deux ou plusieurs fils métalliques (6, 7, 8) de suspension reliant le support (2) et l'actionneur (3), au moins un du support (2) et de l'actionneur (3) comportant un élément (41) de contact auquel deux ou plusieurs fils métalliques (6, 7, 8) de suspension sont chacun connectés par une soudure (44, 45, 46, 47, 48), le au moins un élément de contact (41) comportant deux surfaces (42, 43), la tête de reproduction étant **caractérisée en ce que** pour chaque soudure (44, 45, 46) située sur une première des surfaces (42, 43) du au moins un élément de contact (41), celles étant les plus proches des soudures (44, 45, 46) sont situées sur une seconde des surfaces (42, 43) différente de la première.

2. Tête de reproduction selon la revendication 1, dans laquelle une distance (54) entre des fils métalliques de suspension voisins est inférieure à une largeur (34) de soudure minimum plus un intervalle (35) d'isolation minimum.

3. Tête de reproduction selon la revendication 1, dans laquelle au moins une des soudures (44, 45, 46, 47, 48) possède une largeur (34) supérieure à une largeur de soudure nécessaire minimum.
